# EUROPEAN PATENT SPECIFICATION

(11) **EP 3 402 308 B1**
(45) Date of publication and mention of the grant of the patent: **30.10.2019**
(21) Application number: 18171934.5
(22) Date of filing: 11.05.2018
(51) Int. Cl.: H04W 92/20, H04W 76/15, H04W 76/20

(54) **COORDINATION BETWEEN MULTIRAT BASE STATIONS IN DUAL CONNECTIVITY**
KOORDINATION ZWISCHEN MULTIRAT BASISSTATIONEN IN DUALER KONNEKTIVITÄT
COORDINATION ENTRE STATIONS DE BASE MULTIRAT EN CONNECTIVITE DOUBLE

(30) Priority: 12.05.2017 US 201762505131 P
(43) Date of publication of application: 14.11.2018
(73) Proprietor: HTC Corporation, Taoyuan City 330, (TW)
(72) Inventor: HSIEH, Jing-Rong, 330 Taoyuan City (TW)
(74) Representative: Emde, Eric

(56) References cited:
- EP-A1- 2 922 364
- WO-A1-2014/209204
- WO-A1-2015/115964
- WO-A1-2018/031573
- HUAWEI ET AL: "UE capability coordination in LTE-NR tight interworking", 3GPP DRAFT; R2-168189 UE CAPABILITY COORDINATION IN LTE-NR TIGHT INTERWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Reno, Nevada, USA; 20161114 - 20161118 5 November 2016 (2016-11-05), XP051192967, Retrieved from the Internet: URL:http://www.3gpp.org/ftp/tsg_ran/WG2_RL 2/TSGR2_96/Docs/ [retrieved on 2016-11-05]
- INTEL CORPORATION: "Inter-Node coordination signalling in EN-DC", 3GPP DRAFT; R2-1703444-INTER-NODE-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051245300, Retrieved from the Internet: URL:http://www.3gpp.org/ftp/Meetings_3GPP_ SYNC/RAN2/Docs/ [retrieved on 2017-04-03]
- ERICSSON: "Overview of RRC architecture options for the LTE-NR tight interworking", 3GPP DRAFT; R2-164005 - OVERVIEW OF RRC ARCHITECTURE OPTIONS FOR THE LTE-NR TIGHT INTERWORKING, 3RD GENERATION PARTNERSHIP PROJECT (3GPP), MOBILE COMPETENCE CENTRE ; 650, ROUTE DES LUCIOLES ; F-06921 , vol. RAN WG2, no. Nanjing, P.R. China; 20160523 - 20160527 22 May 2016 (2016-05-22), XP051105340, Retrieved from the Internet: URL:http://www.3gpp.org/ftp/Meetings_3GPP_ SYNC/RAN2/Docs/ [retrieved on 2016-05-22]
- ZTE ET AL: "Consideration on the capability coordination in LTE/NR tight interworking", 3GPP DRAFT; R2-1701676 CONSIDERATION ON THE CAPABILITY COORDINATION IN LTENR TIGHT INTERWORKING, 3RD GENERATION PARTNERSHIP PROJECT (3GPP), MOBILE COMPETENCE CENTRE ; 650, ROUTE DES LUCIOLES ; F-06921 , vol. RAN WG2, no. Athens, Greece; 20170213 - 20170217 4 February 2017 (2017-02-04), XP051223598, Retrieved from the Internet: URL:http://www.3gpp.org/ftp/tsg_ran/WG2_RL 2/TSGR2_97/Docs/ [retrieved on 2017-02-04]

## Description

### Background of the Invention

### 1. Field of the Invention

The present invention relates to a device and a method used in a wireless communication system, and more particularly, to a device and a method of performing a modification procedure.

### 2. Description of the Prior Art

A fifth generation (5G) (or called new radio (NR)) system provides higher data rate and lower latency for data transmission than those of a long-term evolution (LTE) system. A radio access network (RAN) in the LTE system includes at least one base station (BS) for communicating with at least one user equipment (UE) and for communicating with a core network. The core network may be responsible for a mobility management and a Quality of Service (QoS) control of the at least one UE.

WO 2014/209204 A1 relates to a method performed in a wireless device for handling connectivity to two network nodes. The method comprises receiving, from a first network node, a radio resource configuration message, the radio resource configuration message indicating a change in configuration of a connection towards a second network node; applying the change in configuration towards the second network node in response to the radio resource configuration message; and initiating a random access procedure towards the second network node after applying the change in configuration. The disclosure relates to corresponding wireless device, and to methods in network nodes, network nodes, computer programs and computer program The document HUAWEI ET AL: "UE capability coordination in LTE-NR tight interworking",3GPP DRAFT; R2-168189 UE CAPABILITY COORDINATION IN LTE-NR TIGHT INTERWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS,vol. RAN WG2, no. Reno, Nevada, USA; 20161114 - 20161118 5 November 2016 (2016-11-05)discloses one possible coordination between an LTE eNb and a NR gNB for LTE NR tight interworking.

### Summary of the Invention

The present invention therefore provides a communication device and method for handling communications in dual connectivity to solve the abovementioned problem.

According to an aspect of the present invention, a secondary base station (BS) for performing a modification procedure with a master BS is provided as set forth in claim 1.

According to another aspect of the present invention, a master base station (BS) for performing a modification procedure with a secondary BS is provided as set forth in claim 7.

Preferred embodiments of the present invention may be gathered from the dependent claims.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a schematic diagram of a modification procedure according to an example of the present invention.

### Detailed Description

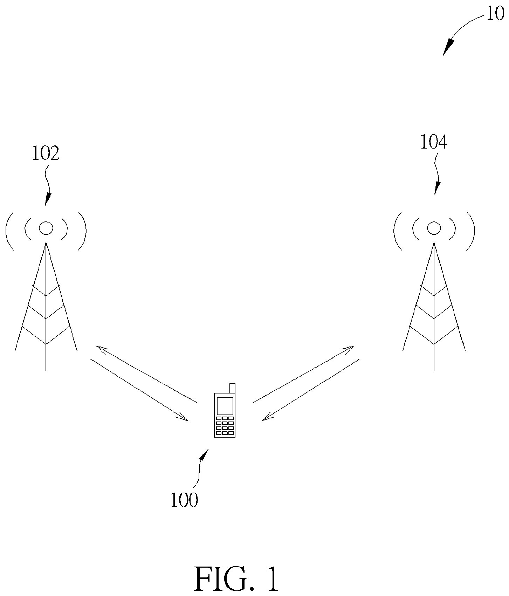

Fig. 1 is a schematic diagram of a wireless communication system 10 according to an example of the present invention. The wireless communication system 10 is briefly composed of a communication device 100, a base station (BS) 102 and a BS 104. In Fig. 1, the communication device 100, the BS 102 and the BS 104 are simply utilized for illustrating the structure of the wireless communication system 10. In Fig. 1, coverage areas of the BS 102 and the BS 104 may be partly overlapped.

In Fig. 1, the communication device 100 may be configured to communicate with the BS 102 and the BS 104 at simultaneously according to a dual connectivity (DC) configured to the communication device 100. That is, the communication device 100 may perform a transmission/reception via both the BS 102 and the BS 104, e.g., at different carrier frequencies. For example, the communication device 100 may receive packets (e.g., protocol data units (PDUs)) from the BS 102 at one carrier frequency and from the BS 104 at another carrier frequency, or the communication device 100 may transmit packets (e.g., PDUs) to the BS 102 at one carrier frequency and to the BS 104 at another carrier frequency. In addition, one of the BS 102 and the BS 104 may be a master BS (i.e., a master node (MN)), and the other one of the BS 102 and the BS 104 may be a secondary BS (i.e., a secondary node (SN)). The BS 102 and the BS 104 may operate according to different radio access technologies (RATs). For example, one of the BS 102 and the BS 104 operates in a long-term evolution (LTE) system, and the other one of the BS 102 and the BS 104 operates in a new radio (NR) (or called fifth generation (5G)) system.

A communication device may be a user equipment (UE), a mobile phone, a laptop, a tablet computer, an electronic book, a portable computer system, a vehicle, a ship or an aircraft. In addition, the BS (s) and the communication device can be seen as a transmitter or a receiver according to direction (i.e., transmission direction), e.g., for an uplink (UL), the communication device is the transmitter and the BS (s) is/are the receiver, and for a downlink (DL), the BS (s) is/are the transmitter and the communication device is the receiver.

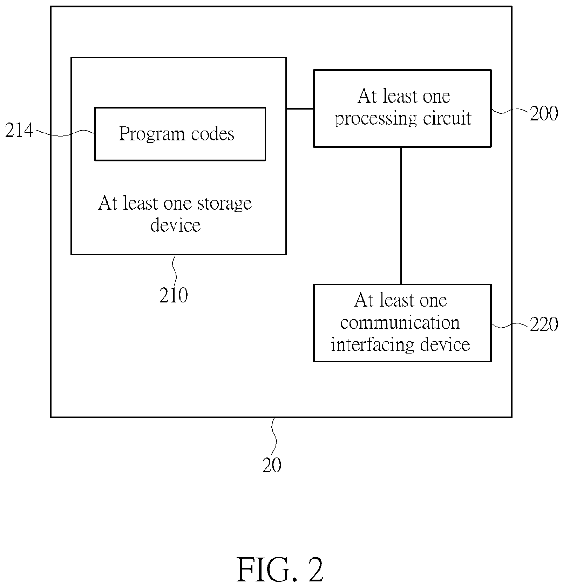

Fig. 2 is a schematic diagram of a communication device 20 according to an example of the present invention. The communication device 20 may be any of the communication device 100, the BS 102 or the BS 104 shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 includes at least one transceiver and is used to transmit and receive signals (e.g., data, messages and/or packets) according to processing results of the at least one processing circuit 200.

In a Multi Radio Access Technology (RAT) DC (MR-DC), a MN and a SN (e.g., the BS 102 and the BS 104) operate according to different RATs. The MN may understand a part of secondary BS configuration (e.g., SCG-Config) and may not understand a SN RRC message, wherein the secondary BS configuration and the SN RRC message are received from the SN. The SCG-Config includes a SCG-ConfigPartSCG which includes a RadioResourceConfigDedicatedSCG, and the RadioResourceConfigDedicatedSCG further includes a drb-ToAddModListSCG (e.g., an addition or modification list of data radio bearers (DRBs) for secondary cell group (SCG)). Thus, how to improve the coordination between the MN and the SN is an important problem to be solved.

In the following examples, a UE is used to represent the communication device 100 in Fig. 1, to simplify the illustration of the embodiments.

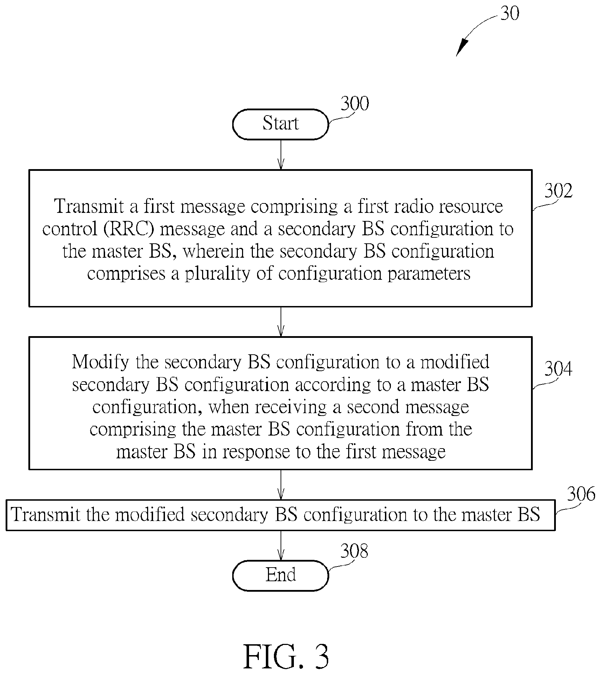

A process 30 in Fig. 3 is utilized in a secondary BS (e.g., the BS 104 in Fig. 1), for performing a modification procedure with a master BS (e.g., the BS 102 in Fig. 1), and includes the following steps:
Step 300: Start.
Step 302: Transmit a first message comprising a first radio resource control (RRC) message and a secondary BS configuration to the master BS, wherein the secondary BS configuration comprises a plurality of configuration parameters.
Step 304: Modify the secondary BS configuration to a modified secondary BS configuration according to a master BS configuration, when receiving a second message comprising the master BS configuration from the master BS in response to the first message.
Step 306: Transmit the modified secondary BS configuration to the master BS.
Step 308: End

According to the process 30, the secondary BS transmits a first message comprising a first RRC message and a secondary BS configuration (e.g., SCG-Config) to the master BS, wherein the secondary BS configuration comprises a plurality of configuration parameters (e.g., drb-ToAddModListSCG). The master BS transmits a second message comprising a master BS configuration to the secondary BS, when determining that a modification for the secondary BS configuration is needed according to the plurality of configuration parameters. Then, the secondary BS modifies the secondary BS configuration to a modified secondary BS configuration according to the master BS configuration, when receiving the second message from the master BS in response to the first message. The secondary BS transmits the modified secondary BS configuration to the master BS. The secondary BS configuration and the modified secondary BS configuration may include the plurality of configuration parameters (e.g., drb-ToAddModListSCG) for the master BS to check or understand information in the first RRC message. Thus, the master BS comprehends the information in the first RRC message, and the coordination between the master BS and the secondary BS is improved.

Realization of the process 30 is not limited to the above description. The following examples may be applied to the process 30.

In one example, the plurality of configuration parameters include a list of DRBs for the secondary BS to be added or modified by the secondary BS. In one example, the first RRC message includes a plurality of configurations for a UE to configure at least one of a Physical layer, a Medium Access Control (MAC) layer and a Radio Link Control (RLC) layer. That is, the UE communicates with the secondary BS according to the plurality of configurations in the first RRC message. In one example, the first message is a SN Modification Required message, and the second message is a SN Modification Request message. In one example, the master BS configuration includes at least one RB configuration of the master BS. In one example, the secondary BS configuration is SCG-Config, and the master BS configuration is SCG-ConfigInfo or mcg-RB-Config which is the RB configuration of the master BS.

In one example, the secondary BS modifies the first RRC message to a modified RRC message according to the master BS configuration which includes the RB configuration (e.g., mcg-RB-Config) of the master BS, when receiving the second message including the master BS configuration from the master BS in response to the first message. Then, the secondary BS transmits the modified RRC message to the master BS. In one example, the modified RRC message includes a plurality of configurations for the UE to configure at least one of the Physical layer, the MAC layer and the RLC layer. That is, the UE communicates with the secondary BS according to the plurality of configurations in the modified RRC message.

In one example, the master BS is a LTE BS (e.g., eNB), and the secondary BS is a NR BS (e.g., gNB). In one example, the master BS is a NR BS (e.g., gNB), and the secondary BS is a LTE BS (e.g., eNB). In one example, the modification procedure is initiated by the master BS or the secondary BS. When the modification procedure is initiated, the secondary BS transmits the first message including at least one of the secondary BS configuration (e.g., drb-ToAddModListSCG) and the first RRC message to the master BS.

In one example, the secondary BS transmits a third message including the second BS configuration (e.g., drb-ToAddModListSCG), wherein the third message does not include the first RRC message. In one example, the condition that the coordination is needed is determined according to pre-defined messages, pre-defined configurations, or a negotiation between the master BS and the secondary BS before the modification procedure is initiated.

In one example, the secondary BS transmits a fourth message including a fourth RRC message. Then, the master BS receives the fourth message, and generates a fifth RRC message including the fourth RRC message. The master BS transmits the fifth RRC message to a UE. In this situation, the coordination between the master BS and the secondary BS is not needed. That is, the master BS may not understand information in the fourth RRC message. In one example, the condition that the coordination is not needed is determined according to pre-defined messages, pre-defined configurations, or a negotiation between the master BS and the secondary BS before the modification procedure is initiated.

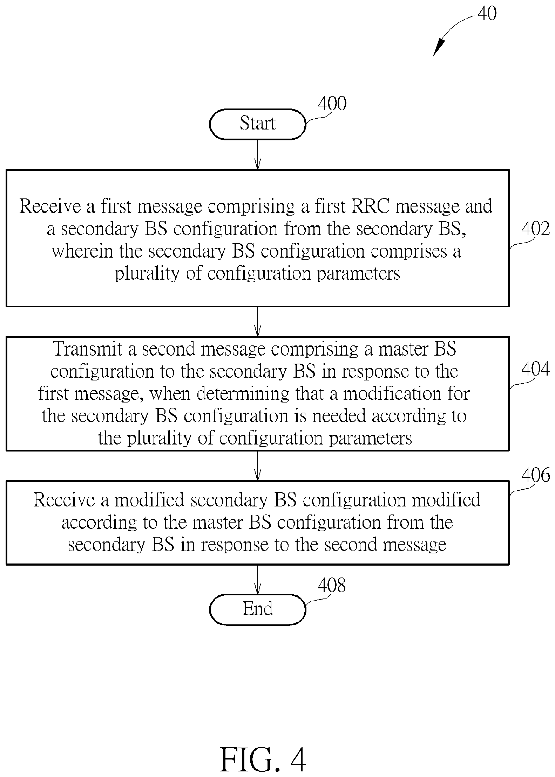

A process 40 in Fig. 4 is utilized in a master BS (e.g., the BS 102 in Fig. 1), for performing a modification procedure with a secondary BS (e.g., the BS 104 in Fig. 1), and includes the following steps:
Step 400: Start.
Step 402: Receive a first message comprising a first RRC message and a secondary BS configuration from the secondary BS, wherein the secondary BS configuration comprises a plurality of configuration parameters.
Step 404: Transmit a second message comprising a master BS configuration to the secondary BS in response to the first message, when determining that a modification for the secondary BS configuration is needed according to the plurality of configuration parameters.
Step 406: Receive a modified secondary BS configuration modified according to the master BS configuration from the secondary BS in response to the second message.
Step 408: End

According to the process 40, the master BS receives a first message comprising a first RRC message and a secondary BS configuration from the secondary BS, wherein the secondary BS configuration comprises a plurality of configuration parameters (e.g., drb-ToAddModListSCG) . Then, the master BS transmits a second message comprising a master BS configuration to the secondary BS in response to the first message, when determining that a modification for the secondary BS configuration is needed according to the plurality of configuration parameters . The master BS receives a modified secondary BS configuration modified according to the master BS configuration from the secondary BS in response to the second message. The secondary BS configuration and the modified secondary BS configuration may include the plurality of configuration parameters (e.g., drb-ToAddModListSCG) for the master BS to check or understand information in the first RRC message. Thus, the master BS comprehends the information in the first RRC message, and the coordination between the master BS and the secondary BS is improved.

Realization of the process 40 is not limited to the above description. The following examples may be applied to the process 40.

In one example, the plurality of configuration parameters include a list of DRBs for the secondary BS to be added or modified by the secondary BS. In one example, the first RRC message includes a plurality of configurations for a UE to configure at least one of a Physical layer, a MAC layer and a RLC layer. That is, the UE communicates with the secondary BS according to the plurality of configurations in the first RRC message. In one example, the first message is a SN Modification Required message, and the second message is a SN Modification Request message. In one example, the master BS configuration includes at least one RB configuration of the master BS. In one example, the secondary BS configuration is SCG-Config, and the MCG configuration is SCG-ConfigInfo or mcg-RB-Config which is the Radio Bearer Configuration of the MN.

In one example, the master BS generates a second RRC message including (e.g., encapsulating) the first RRC message. Then, the master BS transmits the second message to a UE. In one example, the secondary BS modifies the first RRC message to a modified RRC message according to the MCG configuration, and transmits the modified RRC message to the master BS. Then, the master BS generates a second RRC message including the modified RRC message, and transmits the second message to the UE. In one example, the master BS transmits a third message with an appropriate cause value indicating that the modification is needed to the secondary BS, if the master BS does not transmit the second message. In one example, the third message is a SN Modification Refuse message . In one example, the master BS configures the UE according to the secondary BS configuration.

In one example, the master BS is a LTE BS (e.g., eNB), and the secondary BS is a NR BS (e.g., gNB). In one example, the master BS is a NR BS (e.g., gNB), and the secondary BS is a LTE BS (e.g., eNB). In one example, the modification procedure is initiated by the master BS or the secondary BS. When the modification procedure is initiated, the secondary BS transmits the first message including at least one of the secondary BS configuration and the first RRC message to the master BS.

The examples of the process 30 may be applied to the process 40, and are not narrated herein.

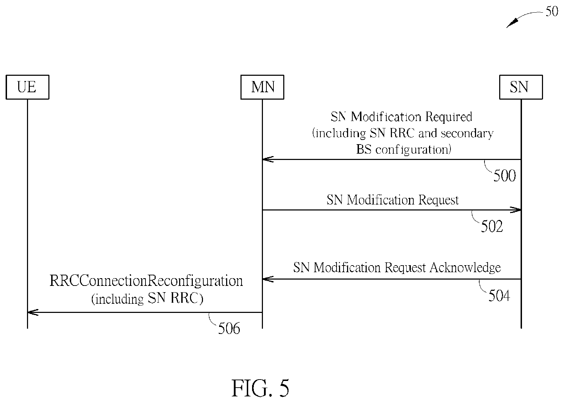

Fig. 5 is a schematic diagram of a modification procedure 50 according to an example of the present invention. Operations of a UE, a MN (e.g., eNB) and a SN (e.g., gNB) in Fig. 5 are described as follows. The UE communicates with the MN via a first RAT (e.g., a LTE RAT), and communicates with the SN via a second RAT (e.g., a NR RAT). The MN communicates with the SN via the second RAT. The SN transmits a SN Modification Required message including a SN RRC message and a secondary BS configuration to the MN (Step 500). The secondary BS includes a drb-ToAddModListSCG. The MN determines whether a modification for the SN RRC message and/or the secondary BS configuration is needed. If the modification for the SN RRC message and/or the secondary BS configuration is needed, the MN transmits a SN Modification Request message including a SCG-ConfigInfo to the SN (Step 502) . The SCG-ConfigInfo may include a master BS configuration (e.g., mcg-RB-Config which is the RB configuration of the master BS) . The SN modifies the SN RRC message and/or the secondary BS configuration to a modified SN RRC message and/or a modified secondary BS configuration according to the SCG-ConfigInfo, respectively. The SN transmits a SN Modification Request Acknowledge message including the modified SN RRC message and/or the modified secondary BS configuration (Step 504). After receiving the SN Modification Request Acknowledge message, the MN transmits a RRCConnectionReconfiguration message including the modified SN RRC message to the UE (Step 506). If the modification for the SN RRC message and/or the secondary BS configuration is not needed, the MN skips Steps 502 and 504, and transmits a RRCConnectionReconfiguration message including the SN RRC message to the UE (Step 506).

Those skilled in the art should readily make combinations, modifications and/or alterations on the abovementioned description and examples. For example, the skilled person easily makes new embodiments of the BSs based on the embodiments and examples of the UE, and makes new embodiments of the UE based on the embodiments and examples of the BSs. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program codes 214.

To sum up, the present invention provides a method and related communication device for performing a modification procedure. A secondary BS configuration includes configuration parameters for a master BS to check or understand information in a RRC message received from a secondary BS. Thus, the coordination between the master BS and the secondary BS is improved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A secondary base station, BS, for performing a modification procedure with a master BS, comprising:
a storage device (210); and
a processing circuit (200), coupled to the storage device (210), wherein the storage device (210) stores, and the processing circuit (200) is configured to execute, instructions of:
transmitting (302) a first message comprising a first radio resource control, RRC, message and a secondary BS configuration to the master BS, wherein the first RRC message comprises a plurality of configurations for a communication device and the secondary BS configuration comprises a plurality of configuration parameters for the master BS to check or understand information in the first RRC message;
modifying (304) the secondary BS configuration to a modified secondary BS configuration according to a master BS configuration, when receiving a second message comprising the master BS configuration from the master BS in response to the first message; and
transmitting (306) the modified secondary BS configuration to the master BS;
wherein the secondary BS and the master BS are adapted to operate in different cellular radio access technologies, RATs.

2. The secondary BS of claim 1, wherein the plurality of configuration parameters comprise a list of data radio bearers, DRBs, for the secondary BS to be added or modified by the secondary BS.

3. The secondary BS of claim 1, wherein the plurality of configurations for a communication device in the first RRC message configure at least one of a Physical layer, a Medium Access Control, MAC, layer and a Radio Link Control, RLC, layer.

4. The secondary BS of claim 1, wherein the processing circuit (200) is configured to further execute instructions of:
modifying the first RRC message to a modified RRC message according to the master BS configuration, when receiving the second message comprising the master BS configuration from the master BS in response to the first message; and
transmitting the modified RRC message to the master BS.

5. The secondary BS of claim 1, wherein the master BS is a long-term evolution, LTE, BS, and the secondary BS is a new radio, NR, BS.

6. The secondary BS of claim 1, wherein the modification procedure is initiated by the master BS or the secondary BS.

7. A master base station, BS, for performing a modification procedure with a secondary BS, comprising:
a storage device (210); and
a processing circuit (200), coupled to the storage device (210), wherein the storage device (210) stores, and the processing circuit (200) is configured to execute, instructions of:
receiving (402) a first message comprising a first radio resource control, RRC, message and a secondary BS configuration from the secondary BS, wherein the first RRC message comprises a plurality of configurations for a communication device and the secondary BS configuration comprises a first plurality of configuration parameters for the master BS to check or understand information in the first RRC message;
transmitting (404) a second message comprising a master BS configuration to the secondary BS in response to the first message, when determining that a modification for the secondary BS configuration is needed according to the plurality of configuration parameters; and
receiving (406) a modified secondary BS configuration modified according to the master BS configuration from the secondary BS in response to the second message;
wherein the secondary BS and the master BS are adapted to operate in different cellular radio access technologies, RATs.

8. The master BS of claim 7, wherein the plurality of configuration parameters comprise a list of data radio bearers, DRBs, for the secondary BS to be added or modified by the secondary BS.

9. The master BS of claim 7, wherein the plurality of configurations for a communication device in the first RRC message configure at least one of a Physical layer, a Medium Access Control, MAC, layer and a Radio Link Control, RLC, layer.

10. The master BS of claim 7, wherein the processing circuit is configured to further execute instructions of:
generating a second RRC message comprising the first RRC message; and
transmitting the second RRC message to a communication device.

11. The master BS of claim 7, wherein the processing circuit is configured to further execute instructions of:
generating a second RRC message comprising a modified RRC message, wherein the modified RRC message is modified according to the master BS configuration and the modified RRC message is received from the secondary BS; and
transmitting the second RRC message to a communication device.

12. The master BS of claim 7, wherein the processing circuit is configured to further execute instructions of:
transmitting a third message to the secondary BS with a cause value indicating that the modification is needed.

13. The master BS of claim 7, wherein the master BS is a long-term evolution, LTE, BS, and the secondary BS is a new radio, NR, BS.

14. The master BS of claim 7, wherein the modification procedure is initiated by the master BS or the secondary BS.

## Patentansprüche

1. Eine sekundäre Basisstation, BS, für die Durchführung eines Modifikationsverfahrens mit einer Master-BS, wobei Folgendes vorgesehen ist:
eine Speichervorrichtung (210); und
eine Verarbeitungsschaltung (200), verbunden mit der Speichervorrichtung (210), wobei die Speichervorrichtung (210) speichert, und wobei die Verarbeitungsschaltung (200) konfiguriert ist, um Befehle von Folgendem auszuführen:
Übertragen bzw. Senden (302) einer ersten Nachricht, die eine erste Radioressourcensteuer bzw. Kontroll-RRC-Nachricht und eine sekundäre BS Konfiguration aufweist zu der Master BS, worin die erste RRC-Nachricht eine Vielzahl von Konfigurationen aufweist für eine Kommunikationsvorrichtung, und wobei die sekundäre BS Konfiguration eine Vielzahl von Konfigurationsparametern aufweist für die Master BS, um zu prüfen oder Information in der ersten RRC-Nachricht zu verstehen;
Modifizieren (304) der sekundären BS-Konfiguration auf eine sekundäre modifizierte BS-Konfiguration gemäß einer Master-BS-Konfiguration, wenn eine zweite Nachricht empfangen wird, die die Master-BS-Konfiguration von dem Master-BS ansprechend auf die erste Nachricht empfängt; und
Senden bzw. Übertragen (306) der modifizierten sekundären BS-Konfiguration zu der Master-BS:
wobei die sekundäre BS und die Master-BS geeignet sind, um unterschiedliche zelluläre Radiozugriffstechnologien (RATs) zu betätigen.

2. Die sekundäre BS nach Anspruch 1, wobei die Vielzahl der Konfigurationsparameter eine Liste von Datenradioträgern, DRBs, aufweist, und zwar für die sekundäre BS zur Addition oder modifiziert durch die sekundäre BS.

3. Die sekundäre BS nach Anspruch 1, wobei die Vielzahl von Konfigurationen für eine Kommunikationsvorrichtung in der ersten RRC-Nachricht mindestens eine einer physikalischen Schicht konfiguriert, wobei eine Mediumzugriffssteuerung (Media Access Control), MAC, Schicht und eine Radioverbindungssteuerung (Radio Link Control), RLC, Schicht vorhanden ist.

4. Die sekundäre BS nach Anspruch 1, wobei die Verarbeitungsschaltung (200) konfiguriert ist, um ferner Instruktionen auszuführen, und zwar:
Modifizieren der ersten RRC-Nachricht auf eine modifizierte RRC-Nachricht gemäß der Master-BS-Konfiguration, wenn die zweite Nachricht empfangen wird, die die Master-BS-Konfiguration von der Master-BS enthält, und zwar ansprechend auf die erste Nachricht; und
Übertragen der modifizierten RRC-Nachricht zu der Master-BS.

5. Die sekundäre BS nach Anspruch 1, wobei die Master-BS eine Langzeitevolution (Long Term Evolution), LTE, BS ist und die sekundäre BS eine neue Radio, NR, BS ist.

6. Die sekundäre BS nach Anspruch 1, wobei die Modifikationsprozedur eingeleitet wird durch die Master-BS oder die sekundäre BS.

7. Eine Master-Basisstation, BS, zur Ausführung einer Modifikationsprozedur mit einer sekundären BS, wobei Folgendes vorgesehen ist:
eine Speichervorrichtung (210); und
eine Verarbeitungsschaltung (200) gekoppelt mit der Speichervorrichtung (210), wobei die Speichervorrichtung (210) speichert, und die Verarbeitungsschaltung (200) konfiguriert ist, um Befehle (Instruktionen) von Folgendem auszuführen:
Empfangen (402) einer ersten Nachricht, die eine erste Radioressourcensteuer, RRC, Nachricht enthält und einer sekundären BS konfiguriert von der sekundären BS, wobei die erste RRC-Nachricht eine Vielzahl von Konfigurationen aufweist für eine Kommunikationsvorrichtung, und die sekundäre BS-Konfiguration eine erste Vielzahl von Konfigurationsparametern aufweist für die Master-BS zur Prüfung oder zum Verständnis zur Information in der ersten RRC-Nachricht;
Senden (404) einer sekundären Nachricht, die eine Master-BS-Konfiguration aufweist an die sekundäre BS, ansprechend auf die erste Nachricht, wenn bestimmt wird, dass eine Modifikation für die sekundäre BS-Konfiguration benötigt wird entsprechend der Vielzahl der Konfigurationsparameter; und
Empfangen (406) einer modifizierten sekundären BS-Konfiguration modifiziert entsprechend der Master-BS-Konfiguration von der sekundären BS in Bezug auf die zweite Nachricht;
wobei die sekundäre BS und die Master-BS geeignet sind, unterschiedliche zellulare Radiozugriffstechnologien (RATs) zu benutzten.

8. Die Master-BS nach Anspruch 7, wobei die Vielzahl der Konfigurationsparameter eine Liste von Datenradioträgern (Data Radio Bearers), DRBs, aufweist, und zwar für jede sekundäre BS, die hinzugefügt werden soll oder modifiziert werden soll durch die sekundäre BS.

9. Die Master-BS nach Anspruch 7, wobei die Vielzahl der Konfigurationen für eine Verbindungsvorrichtung in der ersten RRC-Nachrichtkonfiguration mindestens eines von Folgenden aufweist: eine physikalische Schicht, eine mittlere Zugriffssteuerung (Medium Access Control), MAC, Schicht, und eine Radioverbindungssteuerung (Radio Link Control), RLC, Schicht.

10. Die Master-BS nach Anspruch 7, wobei die Verarbeitungsschaltung konfiguriert ist, um ferner Instruktionen auszuführen, und zwar von:
Erzeugen einer zweiten RRC-Nachricht, die die erste RRC-Nachricht enthält; und
Übertragen der zweiten RRC-Nachricht zu einer Kommunikationsvorrichtung.

11. Die Master-BS nach Anspruch 7, wobei die Verarbeitungsschaltung konfiguriert ist, um ferner Instruktionen auszuführen:
Erzeugen einer zweiten RRC-Nachricht, die eine modifizierte RRC-Nachricht aufweist, wobei die modifizierte RRC-Nachricht modifiziert ist gemäß der Master-BS-Konfiguration, und die modifizierte RRC-Nachricht empfangen wird von der sekundären BS; und
Senden der zweiten RRC-Nachricht an eine Kommunikationsvorrichtung.

12. Die Master-BS nach Anspruch 7, wobei die Verarbeitungsschaltung konfiguriert ist, um ferner Instruktionen auszuführen:
Übertragen einer dritten Nachricht zu der sekundären BS mit einem Begründungswert, der anzeigt, dass die Modifikation gebraucht wird.

13. Die Master-BS nach Anspruch 7, wobei die Master-BS eine Langzeitevolution (Long Term Evolution), LTE, BS ist und die sekundäre BS eine neue Radio NR, BS ist.

14. Die Master-BS nach Anspruch 7, wobei das Modifikationsverfahren eine Anzeige durch die Master-BS oder die sekundäre BS ist.

## Revendications

1. Station de base secondaire, BS, pour mettre en œuvre une procédure de modification avec une BS maître, comprenant :
un dispositif mémoire (210) ; et
un circuit de traitement (200), couplé au dispositif mémoire (210), dans laquelle le dispositif mémoire (210) stocke, et le circuit de traitement (200) est configuré pour exécuter, les instructions suivantes :
émettre (302) un premier message comprenant un premier message de contrôle de ressource radio, RRC, et une configuration de BS secondaire à destination de la BS maître, dans laquelle le premier message RRC comprend une pluralité de configurations pour un dispositif de communication et la BS secondaire comprend une pluralité de paramètres de configuration pour la BS maître pour vérifier ou comprendre les informations du premier message RRC ;
modifier (304) la configuration de la BS secondaire en une configuration de la BS secondaire modifiée selon une configuration de la BS maître, au moment de la réception d'un deuxième message comprenant la configuration de la BS maître en provenance de la BS maître en réponse au premier message ; et
émettre (306) la configuration de la BS secondaire modifiée à destination de la BS maître ;
dans laquelle la BS maître et la BS secondaire sont adaptées à fonctionner dans différentes technologies d'accès radio cellulaires, RAT.

2. BS secondaire selon la revendication 1, dans laquelle la pluralité de paramètres de configuration comprend une liste de supports radio de données, DRB, pour la BS secondaire à ajouter ou à modifier par la BS secondaire.

3. BS secondaire selon la revendication 1, dans laquelle la pluralité de configurations pour un dispositif de communication dans le premier message RRC configure au moins une couche parmi une couche physique, une couche de contrôle d'accès au support, MAC, et une couche de contrôle de liaison radio, RLC.

4. BS secondaire selon la revendication 1, dans laquelle le circuit de traitement (200) est configuré pour exécuter en outre les instructions suivantes :
modifier le premier message RRC en un message RRC modifié selon la configuration de la BS maître, au moment de la réception du deuxième message comprenant la configuration de la BS maître en provenance de la BS maître en réponse au premier message ; et
émettre le message RRC modifié à destination de la BS maître.

5. BS secondaire selon la revendication 1, dans laquelle la BS maître est une BS à évolution à long terme, LTE, et la BS secondaire est une nouvelle BS radio, NR.

6. BS secondaire selon la revendication 1, dans laquelle la procédure de modification est déclenchée par la BS maître ou par la BS secondaire.

7. Station de base maître, BS, pour mettre en œuvre une procédure de modification avec une BS secondaire, comprenant :
un dispositif mémoire (210) ; et
un circuit de traitement (200), couplé au dispositif mémoire (210), dans laquelle le dispositif mémoire (210) stocke, et le circuit de traitement (200) est configuré pour exécuter, les instructions suivantes :
recevoir (402) un premier message comprenant un premier message de contrôle de ressource radio, RRC, et une configuration de la BS secondaire provenant de la BS secondaire, dans laquelle le premier message RRC comprend une pluralité de configurations pour un dispositif de communication et la BS secondaire comprend une première pluralité de paramètres de configuration pour la BS maître pour vérifier ou comprendre les informations du premier message RRC ;
émettre (404) un deuxième message comprenant une configuration de la BS maître à destination de la BS secondaire en réponse au premier message, au moment de la détermination qu'une modification de la configuration de la BS secondaire est nécessaire selon la pluralité de paramètres de configuration ; et
recevoir (406) une configuration de la BS secondaire modifiée selon la configuration de la BS maître en provenance de la BS secondaire en réponse au deuxième message ;
dans laquelle la BS maître et la BS secondaire sont adaptées à fonctionner dans différentes technologies d'accès radio cellulaires, RAT.

8. BS maître selon la revendication 7, dans laquelle la pluralité de paramètres de configuration comprend une liste de supports radio de données, DRB, pour la BS secondaire à ajouter ou à modifier par la BS secondaire.

9. BS maître selon la revendication 7, dans laquelle la pluralité de configurations pour un dispositif de communication dans le premier message RRC configure au moins une couche parmi une couche physique, une couche de contrôle d'accès au support, MAC, et une couche de contrôle de liaison radio, RLC.

10. BS maître selon la revendication 7, dans laquelle le circuit de traitement est configuré pour exécuter en outre les instructions suivantes :
générer un deuxième message RRC comprenant le premier message RRC ; et
émettre le deuxième message RRC à destination d'un dispositif de communication.

11. BS maître selon la revendication 7, dans laquelle le circuit de traitement est configuré pour exécuter en outre les instructions suivantes :
générer un deuxième message RRC comprenant un message RRC modifié, dans laquelle le message RRC modifié est modifié selon la configuration de la BS maître et le message RRC modifié est reçu en provenance de la BS secondaire ; et
émettre le deuxième message RRC à destination d'un dispositif de communication.

12. BS maître selon la revendication 7, dans laquelle le circuit de traitement est configuré pour exécuter en outre les instructions suivantes :
émettre un troisième message à destination de la BS secondaire avec une valeur de cause indiquant que la modification est nécessaire.

13. BS maître selon la revendication 7, dans laquelle la BS maître est une BS à évolution à long terme, LTE, et la BS secondaire est une nouvelle BS radio, NR.

14. BS maître selon la revendication 7, dans laquelle la procédure de modification est déclenchée par la BS maître ou par la BS secondaire.
